# EUROPEAN PATENT APPLICATION

(11) **EP 4 563 402 A1**
(43) Date of publication of application: **04.06.2025**
(21) Application number: 23942086.2
(22) Date of filing: 26.09.2023
(51) Int. Cl.: B60L 53/00

(54) **CHARGING CIRCUIT, SYSTEM AND METHOD, VEHICLE, AND STORAGE MEDIUM**

(30) Priority: 20.06.2023 CN 202310738757
(71) Applicant: Deepal Automobile Technology Co., Ltd., Chongqing 401133 (CN)
(72) Inventor: XU, Chuanchang, Chongqing 401135 (CN); ZHOU, Cheng, Chongqing 401135 (CN); CHEN, Po, Chongqing 401135 (CN); YU, Cheng, Chongqing 401135 (CN); YANG, Xu, Chongqing 401135 (CN)
(74) Representative: Petraz, Gilberto Luigi
(86) International application number: PCT/CN2023/121482
(87) International publication number: WO 2024/259819

(57) **Abstract**

The present disclosure relates to a charging circuit, a system, a charging method, a vehicle, and a storage medium. The charging circuit includes a power battery, an electric drive module, and a high-voltage box of the power battery connected to each of the power battery and the electric drive module. The high-voltage box is further connected to a direct current charging port. A direct current boost charging member is integrated in the high-voltage box. Direct current boost charging of the power battery is realized through the direct current boost charging member and the electric drive module. **In** this way, problems in the related art such as increasing redundancy and a failure rate of the system and reducing safety and stability of the system due to adoption of a method of adding a boost device or a boost circuit for controlling boost charging, or increasing manufacturing costs and layout difficulty of the vehicle due to adoption of a vehicle drive system for constructing a fast charging boost circuit.

## Description

### CROSS-REFERENCE TO RELATED APPLICATION

This application is based on and claims priority to Chinese Patent Application No. 202310738757. X filed on June 20, 2023, the entire contents of which are incorporated herein by reference.

### TECHNICAL FIELD

The present disclosure relates to the field of an electric vehicle direct current charging technologies, and in particular to a charging circuit, a system, a charging method, a vehicle, and a storage medium.

### BACKGROUND

At present, methods for charging a power battery of an electric vehicle are mainly divided into two methods: alternating current slow charging and direct current fast charging. The alternating current slow charging is achieved by connecting an on-board charger to the State Grid, using an alternating current charging circuit formed by the on-board charger to convert an alternating current of the State Grid into a direct current that matches a battery voltage and then charge the power battery. While the direct current fast charging is achieved by connecting a direct current charging port to a direct current charging equipment, converting, by the direct current charging equipment, the alternating current of the State Grid into the direct current, and then directly supplying the direct current to the power battery through a direct current charging circuit.

However, with increase of the battery voltage, when a rated voltage of a charging pile is lower than a voltage of the power battery, it is impossible to perform direct current charging on the vehicle. At present, most of voltage platforms of domestic direct current chargers are at 500V or below, which is impossible to directly perform direct current charging on the electric vehicle whose battery voltage is higher than a voltage of the charging pile.

In the related art, a mainstream technical solution of direct current boost charging of the electric vehicle is to add a boost device and a boost circuit or construct a fast charging boost circuit by using a vehicle drive system. However, with respect to adding the boost device and the boost circuit, since a control circuit board is separately added to the boost device to control a boost charging process, redundancy and a failure rate of the system are increased, and safety and robustness of the system are reduced. While with respect to constructing the fast charging boost circuit by using the vehicle drive system, since a fast charging boost control box is separately added to the boost circuit, manufacturing costs of the whole vehicle and layout difficulty of vehicle design are increased.

### SUMMARY

The present disclosure provides a charging circuit, a system, a charging method, a vehicle, and a storage medium, aiming at solving problems in the related art such as increasing redundancy and a failure rate of the system and reducing safety and stability of the system due to adoption of a method of adding a boost device or a boost circuit for controlling boost charging, or increasing manufacturing costs and layout difficulty of the vehicle due to adoption of a vehicle drive system for constructing a fast charging boost circuit.

In a first aspect, a charging circuit is provided according to embodiments of the present disclosure. The charging circuit includes a power battery, an electric drive module, and a high-voltage box of the power battery connected to each of the power battery and the electric drive module. The high-voltage box is further connected to a direct current charging port. A direct current boost charging member is integrated in the high-voltage box. Direct current boost charging is performed for the power battery through the direct current boost charging member and the electric drive module.

According to above technical means, in the embodiments of the present disclosure, the direct current boost charging is performed for the power battery through the direct current boost charging member integrated in the high-voltage box and the electric drive module, which realizes automation of the direct current boost charging, reducing a failure rate of a system and improving stability and safety of the system. Also, an overall structure is simple, which avoids additional mounting of a boost device, reducing manufacturing costs and layout difficulty of a vehicle.

Optionally, the direct current boost charging member includes a boost relay, a first capacitor, and a capacitor relay. An end of the boost relay is connected to an end of the direct current charging port. Another end the boost relay is connected to an end of the first capacitor. Another end of the first capacitor is connected to an end of the capacitor relay. Another end of the capacitor relay is connected to another end of the direct current charging port. The other end of the boost relay is further connected to the electric drive module through a center line.

According to above technical means, in the embodiment of the present disclosure, the automation is performed for the direct current boost charging through the direct current boost charging member.

Optionally, the direct current boost charging member further includes a discharge resistor. The discharge resistor is connected in parallel to two ends of the first capacitor to discharge a voltage of the first capacitor.

According to above technical means, the discharge resistor according to the embodiment of the present disclosure is used to discharge the voltage of the capacitor connected in parallel to the discharge resistor, ensuring high-voltage safety of the system.

Optionally, a direct current charging member is further integrated in the high-voltage box. Direct current charging is performed for the power battery through the direct current charging member, or direct current boost charging is performed for the power battery through the direct current charging member, the direct current boost charging member, and the electric drive module.

According to above technical means, in the embodiments of the present disclosure, the direct current charging member is further integrated in the high-voltage box. The direct current charging is performed for the power battery through the direct current charging member, or the direct current boost charging is performed for the power battery through the direct current charging member, the direct current boost charging member, and the electric drive module. Charging modes may be switched as desired, which enables charging to be more automatic, reducing the failure rate of the system and improving the stability and safety of the system.

Optionally, the direct current charging member includes a direct current relay, a main positive relay, and a main negative relay. An end of the direct current relay is connected to each of an end of the direct current boost charging member and an end of the direct current charging port. Another end of the direct current relay is connected to an end of the main negative relay. Another end of the main negative relay is connected to a negative electrode of the power battery. A positive electrode of the power battery is connected to an end of the main positive relay. Another end of the main positive relay is connected to each of another end of the direct current boost charging member and another end of the direct current charging port.

According to above technical means, in the embodiment of the present disclosure, direct current charging is performed for the power battery through the direct current charging member.

Optionally, the direct current charging member further includes a pre-charge relay and a pre-charge resistor. An end of the pre-charge relay is connected to an end of the main positive relay. Another end of the pre-charge relay is connected to an end of the pre-charge resistor. Another end of the pre-charge resistor is connected to another end of the main positive relay.

Optionally, the direct current charging member further includes a fuse disposed between the power battery and the main positive relay.

According to above technical means, the fuse according to the embodiments of the present disclosure is used to protect a circuit. After the current exceeds a predetermined value for a period of time, heat generated by the fuse itself melts the fuse, breaking the circuit.

In a second aspect, a charging system is provided according to embodiments of the present disclosure. The charging system includes: the charging circuit according to any one of the above embodiments; and a battery management system configured to identify a maximum allowable output voltage of a charging pile after the charging circuit is connected to the charging pile. The battery management system is configured to control the charging circuit to perform direct current charging on the power battery in response to the maximum allowable output voltage being greater than a battery voltage of the power battery, or control the charging circuit to perform direct current boost charging on the power battery in response to the maximum allowable output voltage being smaller than or equal to the battery voltage of the power battery.

In a third aspect, a vehicle is provided according to embodiments of the present disclosure. The vehicle includes the charging system according to the above embodiments.

In a fourth aspect, a method for charging a power battery is provided according to embodiments of the present disclosure. The method performs direct current charging or direct current boost charging on the power battery using a charging circuit integrated with a direct current boost charging member and a direct current charging member. The method includes: obtaining a maximum allowable output voltage of a charging pile subsequent to the charging circuit being connected to the charging pile; and controlling the charging circuit to perform direct current charging on the power battery in response to the maximum allowable output voltage being greater than a battery voltage of the power battery, or controlling the charging circuit to perform direct current boost charging on the power battery in response to the maximum allowable output voltage being smaller than or equal to the battery voltage of the power battery.

Optionally, the charging circuit further includes an electric drive module. Said controlling the charging circuit to perform direct current boost charging on the power battery includes: sending a voltage transformation demand instruction to the charging pile and a voltage reduction instruction to the electric drive module subsequent to the power battery reaches a high voltage in a direct current boost charging process, in which the electric drive module enters a voltage reduction mode according to the voltage reduction instruction and reduces an output voltage of the power battery to a voltage matched with a voltage of the charging pile; and sending a voltage boost instruction to the electric drive module subsequent to successfully handshaking with the charging pile, in which the electric drive module enters a voltage boost mode according to the voltage boost instruction, and direct current boost charging is performed on the power battery through the electric drive module and the direct current boost charging member.

Optionally, the direct current boost charging member includes a boost relay, a first capacitor, and a capacitor relay. The direct current charging member includes a direct current delay, a main positive relay, and a main negative relay. A first sampling point is disposed between the main positive relay and a direct current charging port. A second sampling point is disposed between the direct current relay and the direct current charging port. A third sampling point is disposed between the capacitor relay and the first capacitor. A fourth sampling point is disposed between the boost relay and the first capacitor.

Optionally, the method further includes subsequent to the power battery reaches the high voltage in the direct current boost charging process: obtaining voltages of the first sampling point, the second sampling point, the third sampling point, and the fourth sampling point; calculating a first voltage between the third sampling point and the fourth sampling point, a second voltage between the first sampling point and the fourth sampling point, and a third voltage between the first sampling point and the second sampling point based on the voltages of the first sampling point, the second sampling point, the third sampling point, and the fourth sampling point; when the high voltage of the power battery is activated, the vehicle is not charged with direct current, and no closing instruction is issued for the capacitor relay, determining that the capacitor relay has an adhesion fault in response to the first voltage being equal to the second voltage; and when the high voltage of the power battery is activated, the vehicle is not charged with direct current, the capacitor relay has no adhesion fault, and no closing instruction is issued for the boost relay, determining that the boost relay has an adhesion fault in response to the first voltage being equal to the third voltage.

In a fifth aspect, a computer-readable storage medium is provided according to embodiments of the present disclosure. The computer-readable storage medium has a computer program stored thereon. The computer program is executed by a processor to implement the method for charging the power battery according to the above embodiments.

Beneficial effects of embodiments of the present disclosure:
(1) In the embodiments of the present disclosure, direct current boost charging is performed for a power battery through a direct current boost charging member integrated in a high-voltage box and an electric drive module, which further realizes automation of the direct current boost charging, reducing a failure rate of a system and improving stability and safety of the system. Also, an overall structure is simple, which avoids additional mounting of a boost device, reducing manufacturing costs and layout difficulty of a vehicle.
(2) In the embodiments of the present disclosure, the direct current boost charging is performed for the power battery through the direct current boost charging member.
(3) A discharge resistor according to the embodiments of the present disclosure is used to discharge voltages of capacitors connected in parallel to the discharge resistor, ensuring high-voltage safety of the system.
(4) In the embodiments of the present disclosure, a direct current charging member is further integrated in the high-voltage box. Direct current charging is performed for the power battery through the direct current charging member, or the direct current boost charging is performed for the power battery through the direct current charging member, the direct current boost charging member, and the electric drive module. Charging modes may be switched as desired, which enables charging to be more automatic, reducing the failure rate of the system and improving the stability and safety of the system.
(6) A fuse according to the embodiments of the present disclosure is used to protect a circuit. After the current exceeds a predetermined value for a period of time, heat generated by the fuse itself melts the fuse, breaking the circuit.

Additional aspects and advantages of the present disclosure will be provided at least in part in the following description, or will become apparent at least in part from the following description, or can be learned from practicing of the present disclosure.

### BRIEF DESCRIPTION OF DRAWINGS

The above and/or additional aspects and advantages of the present disclosure will become more apparent and more understandable from the following description of embodiments taken in conjunction with the accompanying drawings.
FIG. 1 is a schematic diagram of a boost device provided in the related art.
FIG. 2 is a schematic diagram of a boost loop constructed by a three-phase motor of a vehicle drive system provided in the related art.
FIG. 3 is a structural diagram of a charging circuit according to an embodiment of the present disclosure.
FIG. 4 is a schematic block diagram of a charging circuit according to an embodiment of the present disclosure.
FIG. 5 is a structural diagram of a charging system according to an embodiment of the present disclosure.
FIG. 6 is a flowchart of a method for charging a power battery according to an embodiment of the present disclosure.
FIG. 7 is a schematic diagram of voltage sampling points at a high voltage loop of a charging circuit according to an embodiment of the present disclosure.
FIG. 8 is a schematic diagram of a direct current boost charging logic according to an embodiment of the present disclosure.

Where: 10-charging circuit, 100-power battery, 200-electric drive module, 300-high-voltage box, F1-fuse, R1-pre-charge resistor, K4-main positive relay, K5-pre-charge relay, K6-main negative relay, C1-first capacitor, R2-discharge resistor, K1-boost relay, K2-direct current relay, K3-capacitor relay, C-first sampling point, E-second sampling point, F-third sampling point, G-fourth sampling point.

### DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

With rapid development and popularization of electric vehicles, improvement of driving range, driving performance, and charging efficiency has become focus of consumers and electric vehicle original equipment manufacturers. The most direct and effective way is to improve power battery voltage platforms. At present, domestic mainstream electric vehicle original equipment manufacturers are planning to produce electric vehicles with a 750V high battery voltage platform. However, most of direct current charger voltage platforms of current electric vehicles are 500V and below. With increase of a battery voltage, when a rated voltage of a charging pile is lower than a voltage of the power battery, a vehicle fails to be charged with direct current.

At present, a mainstream technical solution for direct current boost charging in an electric vehicle market is to add a boost device and a boost circuit or construct a fast charging boost circuit by using a vehicle drive system.

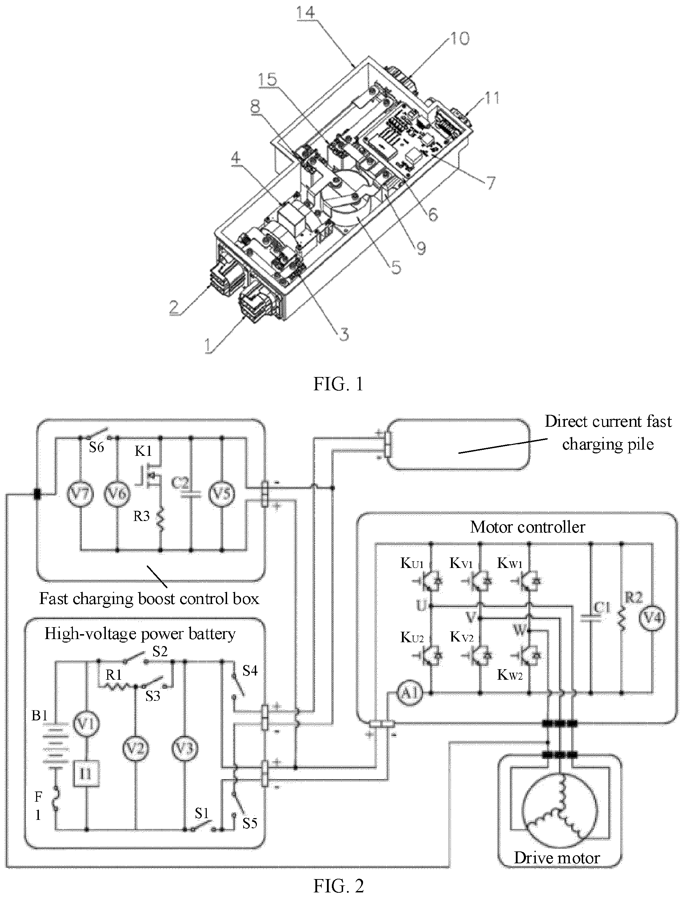

In the related art (1), a boost device is designed by using a boost inductor, a high-voltage relay, a high-voltage filter assembly, a film capacitor, a control circuit, and a fixing support. The boost device has an end connected to a direct current charging pile and another end connected to a power battery. A specific structure of the boost device is illustrated in FIG. 1. A supporting shielding plate is disposed above the boost inductor. A control circuit board is disposed above the supporting shielding plate. A relay, a negative relay, and a positive relay are all connected to the control circuit board. A current of the charging pile is boosted by the boost device and then input into the power battery for charging. In this boost charging scheme, since the control circuit board is added to the boost device to control a boost charging process, redundancy and a failure rate of a system are increased, and safety and robustness of the system need to be improved.

In the related art (2), a direct current boost charging loop is formed by using a fast charging boost control box, a high-voltage power battery, a motor controller, and a three-phase drive motor, as illustrated in FIG. 2. During a voltage boost process, a negative electrode of the direct current charging pile is connected to a negative electrode of the power battery. Positive output of the charging pile flows through the fast charging boost control box and the three-phase drive motor successively and then enters the battery to perform boost charging on the battery. A boost loop is constructed by using the three-phase motor of the vehicle drive system in this scheme. However, the fast charging boost control box is added separately to the boost loop, increasing manufacturing costs of a whole vehicle and layout difficulty of vehicle design.

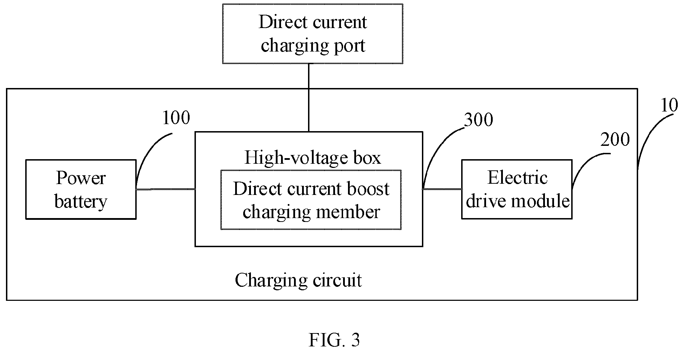

A charging circuit, a system, a charging method, a vehicle, and a storage medium according to the embodiments of the present disclosure are described below with reference to the accompanying drawings. Specifically, FIG. 3 is a structural diagram of a charging circuit according to an embodiment of the present disclosure.

As illustrated in FIG. 3, the charging circuit 10 includes a power battery 100, an electric drive module 200, and a high-voltage box 300 of a power battery.

The high-voltage box 300 is connected to each of the power battery 100 and the electric drive module 200. The high-voltage box is further connected to a direct current charging port. A direct current boost charging member is integrated in the high-voltage box 300. Direct current boost charging is performed for the power battery 100 through the direct current boost charging member and the electric drive module 200.

It should be understood that, in the embodiment of the present disclosure, the direct current boost charging is performed on the power battery 100 through the direct current boost charging member integrated in the high-voltage box 300 and the electric drive module 200, which realizes automation of the direct current boost charging, reducing a failure rate of the system and improving stability and safety of the system. Also, an overall structure is simple, which avoids additional mounting of a boost device, reducing manufacturing costs and layout difficulty of the vehicle.

Specifically, a charging logic refers to: entering a direct current boost charging process when it is recognized that a maximum allowable output voltage of the charging pile is smaller than the battery voltage. A boost charging logic is as follows. It is collected and determined whether a required voltage condition is met. In response to the required voltage condition being met, under this condition, a battery management system requests an electric drive to output a voltage matching the voltage of the charging pile, and enters a charging handshake stage. The battery management system sends a voltage boost request instruction to the electric drive, the electric drive enters a voltage boost mode, and the charging pile starts to output high power to realize a direct current boost charging function.

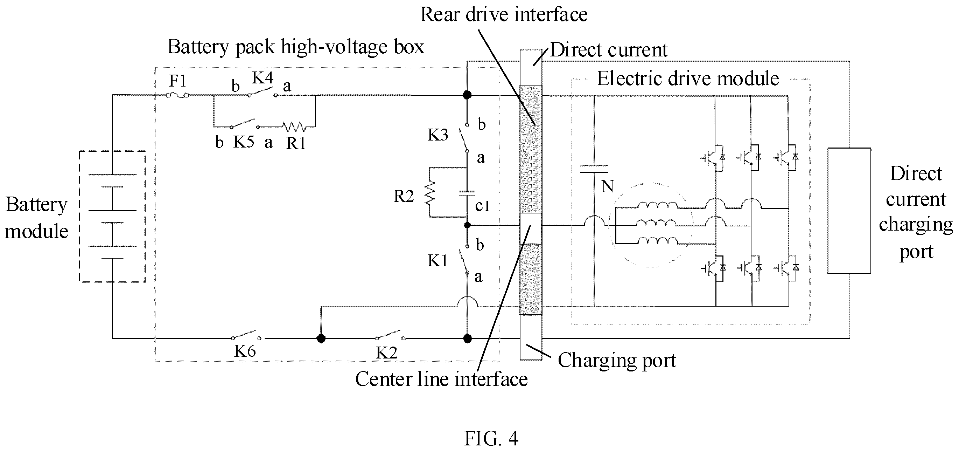

In the embodiment of the present disclosure, as illustrated in FIG. 4, the direct current boost charging member includes a boost relay K1, a first capacitor C1, and a capacitor relay K3.

An end of the boost relay K1 is connected to an end of the direct current charging port. Another end the boost relay K1 is connected to an end of the first capacitor C1. Another end of the first capacitor C1 is connected to an end of the capacitor relay K3. Another end of the capacitor relay K3 is connected to another end of the direct current charging port. The other end of the boost relay K1 is further connected to the electric drive module 200 through a center line.

It should be understood that, in the embodiment of the present disclosure, the automation is performed for the direct current boost charging through the direct current boost charging member.

Specifically, when it is recognized that the maximum allowable output voltage of the charging pile is smaller than the battery voltage, and a charging mode is a direct current boost charging mode at this time, voltages across the capacitor relay K3 and the boost relay K1 are collected and determined, and the capacitor relay K3 and the boost relay K1 are closed after a determining condition is met.

It should be noted that, the determining condition is as follows. The capacitor relay K3 is controlled to close after the battery management system determines that a collected voltage CF across the first capacitor C1 or a voltage difference between a voltage CG across the boost relay K1 and the voltage CF across the first capacitor C1 is smaller than a certain value for a certain period of time. The boost relay K1 is closed after determining that each of the voltage across the boost relay K1 and a voltage of the direct current charging port is smaller than a certain value for a certain period of time. A main positive relay K4 and a main negative relay K6 are closed, and a high voltage instruction is sent to the battery. While the first capacitor C1 releases the capacitor voltage through a parallel discharge resistor R2, which is consumed in the form of heat through the discharge resistor R2, ensuring high-voltage safety of the system.

In the embodiment of the present disclosure, as illustrated in FIG. 4, the direct current boost charging member further includes the discharge resistor R2.

The discharge resistor R2 is connected in parallel to two ends of the first capacitor C1 to discharge the voltage of the first capacitor C1.

It should be understood that, the discharge resistor R2 according to the embodiment of the present disclosure is used to discharge the voltage of the capacitor connected in parallel to the discharge resistor R2, ensuring the high-voltage safety of the system.

In the embodiment of the present disclosure, as illustrated in FIG. 4, a direct current charging member is further integrated in the high-voltage box 300. The direct current charging is performed for the power battery 100 through the direct current charging member, or the direct current boost charging is performed for the power battery 100 through the direct current charging member, the direct current boost charging member, and the electric drive module 200.

It should be understood that, in the embodiment of the present disclosure, charging modes may be switched as desired. The direct current charging is performed for the power battery 100 through the direct current charging member, and the direct current boost charging is performed for the power battery 100 through the direct current charging member, the direct current boost charging member, and the electric drive module 200. In this way, charging becomes more automatic, reducing the failure rate of the system and improving the stability and safety of the system.

It should be noted that, a direct current boost charging adding device in the direct current boost charging member and the direct current charging member are connected through a copper bar and fixed in a battery high-voltage box. Therefore, the battery management system may freely drive and control each charging component, automatically identify the direct current charging and the direct current boost charging, and enter into a charging process.

Specifically, the charging mode is divided into a direct current charging mode and the direct current boost charging mode. Before executing a corresponding mode, it is necessary to determine magnitude between the maximum allowable output voltage of the charging pile and the battery voltage. The charging logic is as follows. After a charging gun is inserted and swiped for charging, when it is recognized that the maximum allowable output voltage of the charging pile is greater than the battery voltage, the battery management system is used to control the direct current charging member to directly perform the direct current charging on the power battery 100. When it is recognized that the maximum allowable output voltage of the charging pile is smaller than the battery voltage, the battery management system is used to control the direct current boost charging member, the direct current charging member, and the electric drive module 200 to enter the direct current boost charging mode and perform boost charging on the power battery 100.

In the embodiment of the present disclosure, as illustrated in FIG. 4, the direct current charging member includes a direct current relay K2, a main positive relay K4, and a main negative relay K6.

An end of the direct current relay K2 is connected to each of an end of the direct current boost charging member and an end of the direct current charging port. Another end of the direct current relay K2 is connected to an end of the main negative relay K6. Another end of the main negative relay K6 is connected to a negative electrode of the power battery 100. A positive electrode of the power battery 100 is connected to an end of the main positive relay K4. Another end of the main positive relay K4 is connected to each of another end of the direct current boost charging member and another end of the direct current charging port.

It should be understood that, in the embodiment of the present disclosure, the direct current charging is performed for the power battery 100 through the direct current charging member.

Specifically, the charging logic based on above devices is as follows. After the charging gun is inserted and swiped for charging, when it is recognized that the maximum allowable output voltage of the charging pile is greater than the battery voltage, the boost relay K1 and the capacitor relay K3 are disconnected, the direct current relay K2, the main positive relay K4, and the main negative relay K6 are closed, and the charging pile directly perform the direct current charging on the power battery. When it is recognized that the maximum allowable output voltage of the charging pile is smaller than the battery voltage, the direct current boost charging process is entered. The boost charging logic is collecting and determining the voltages across the capacitor relay K3 and the boost relay K1, closing the capacitor relay K3 and the boost relay K1 after the determining condition is met, and then closing the main positive relay K4 and the main negative relay K6.

In the embodiment of the present disclosure, as illustrated in FIG. 4, the direct current charging member further includes a pre-charge relay K5 and a pre-charge resistor R1.

An end of the pre-charge relay K5 is connected to the end of the main positive relay K4. Another end of the pre-charge relay K5 is connected to an end of the pre-charge resistor R1. Another end of the pre-charge resistor is connected to the other end of the main positive relay K4.

In the embodiment of the present disclosure, as illustrated in FIG. 4, the direct current charging member further includes a fuse F1.

The fuse F1 is disposed between the power battery 100 and the main positive relay K4.

It should be understood that, the fuse according to the embodiment of the present disclosure is used to protect a circuit.

It should be noted that, after the circuit exceeds a predetermined value, heat generated by the fuse itself causes the melt to fuse, in such a manner that the circuit is disconnected to achieve a purpose of protecting the circuit.

The charging circuit according to the embodiment of the present disclosure performs the direct current boost charging on the power battery through the direct current boost charging member integrated in the high-voltage box and the electric drive module, which realizes the automation of the direct current boost charging, reducing the failure rate of the system and improving the stability and safety of the system. Also, the overall structure is simple, which avoids additional mounting of the boost device, reducing the manufacturing costs and layout difficulty of the vehicle.

The charging circuit is described in detail with reference to FIG. 4. The direct current boost charging member may be a first switch module, and the direct current charging member may be a second switch module. The following embodiments may be described using this description, which are described in detail as follows.

The first switch module and the second switch module are both integrated and fixed in the high voltage box of a power battery pack, and are connected to the electric drive module through a center line L1 and an electric drive output line after integration. Specifically, an end of the center line is connected to each of the boost relay K1, the voltage stabilizing capacitor C1, and the discharge resistor R2. In the power battery, a negative copper bar of the direct current charging port is directly connected to the *a* terminal of the boost relay K1 and then connected to the *a* terminal of a fast charging relay K2. The center line L1 is connected to the b terminal of the boost relay K1 through the copper bar in the power battery. A positive electrode of the direct current charging port is directly connected to a positive electrode of the electric drive output and the main positive relay K4 through the copper bar in the battery pack. The discharge resistor R2 is connected in parallel with the voltage stabilizing capacitor C1. After parallel connection, an end of the discharge resistor R2 is connected to the b terminal of the boost relay K1 through the copper bar, and another end is connected in parallel with the *a* terminal of the capacitor relay K3. The *b* terminal of the capacitor relay K3 is connected to the *a* terminal of the main positive relay K4. That is, the *b* terminal of the capacitor relay K3 is positively connected to the positive electrode of the direct current charging port and the electric drive output.

Through above connection methods, the direct current boost charging adding device includes the boost relay K1, the capacitor relay K3, the voltage stabilizing capacitor C1, and the discharge resistor R2 integrated in the high-voltage box of the power battery, and connected to the electric drive module through an electric drive output port and the center line L1 to realize the direct current boost charging function. After the first switch module and the second switch module are both integrated in the power battery, opening and closing control of the capacitor relay K3 and the boost relay K1 is uniformly controlled by the battery management system, which realizes an automatic operation of the direct current boost charging and simultaneously reduces the redundancy and failure points of the system.

Specifically, the boost charging logic is as follows. After the charging gun is inserted and swiped for charging, when it is recognized that the maximum allowable output voltage of the charging pile is greater than the battery voltage, the boost relay K1 and the capacitor relay K3 of the direct current boost charging member are controlled to be disconnected, the direct current relay K2 is controlled to be closed, the main positive relay K4 and the main negative relay K6 of the direct current charging member are controlled to be closed, and the charging pile directly performs direct current charging on the power battery. When it is recognized that the maximum allowable output voltage of the charging pile is smaller than the battery voltage, the direct current boost charging process is entered. The boost charging logic is collecting and determining the voltages across the capacitor relay K3 and the boost relay K1 of the direct current boost charging member, closing the capacitor relay K3 and the boost relay K1 of the direct current boost charging member after the determining condition is met, and then closing the main positive relay K4 and the main negative relay K6 of the direct current charging member and sending the high voltage instruction to the battery.

Under this condition, the battery management system sends a voltage transformation demand instruction to the charging pile and sends a voltage reduction request instruction to the electric drive. After an electric drive charging voltage transformation mode state changes to a voltage reduction mode, a battery output voltage is reduced by the electric drive and then a voltage matching the voltage of the charging pile is output from the electric drive, in such a manner that the voltage across the voltage stabilizing capacitor C1 matches a voltage transformation demand voltage sent by the battery management system, successfully handshaking with the charging pile according to national standard requirements. At this time, the charging pile may output to the outside.

The battery management system sends the voltage boost request instruction to the electric drive, the electric drive responds and the electric drive charging transformation mode state changes to the voltage boost mode, and the battery management system corrects the request voltage and request current to the charging pile. Output of the *a* terminal of the charging pile directly enters the battery pack through the main positive relay K4, and output of the *b* terminal of the charging pile flows into the electric drive through the boost relay K1 and the center line for voltage boosting. After the electric drive outputs the current, the current enters the power battery through the main negative relay K6 to realize the direct current boost charging function. After entering normal direct current boost charging, the battery management system controls the boost relay K1 to be disconnected. The voltage stabilizing capacitor C1 releases the capacitor voltage through the parallel discharge resistor R2, which is consumed in a form of heat through the discharge resistor R2 to ensure the high-voltage safety of the system.

A charging system according to the embodiments of the present disclosure is described below with reference to the accompanying drawings.

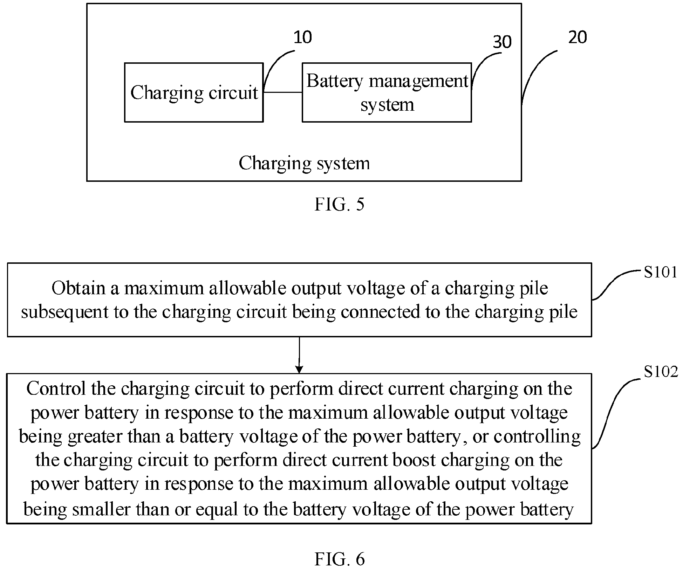

FIG. 5 is a schematic block diagram of a charging system according to an embodiment of the present disclosure.

As illustrated in FIG. 5, the charging system 20 includes a charging circuit 10 and a battery management system 30.

The battery management system 30 is configured to identify a maximum allowable output voltage of a charging pile after the charging circuit 10 is connected to the charging pile, control the charging circuit to perform direct current charging on the power battery 100 in response to the maximum allowable output voltage being greater than a battery voltage of the power battery 100, or control the charging circuit to perform direct current boost charging on the power battery 100 in response to the maximum allowable output voltage being smaller than or equal to the battery voltage of the power battery 100.

It should be noted that, the foregoing explanation of the embodiments of the charging circuit is also applicable to the charging system of the embodiments, and thus details thereof will be omitted here.

The charging system according to the embodiments of the present disclosure is configured to identify the maximum allowable output voltage of the charging pile after the charging circuit is connected to the charging pile. The battery management system is used to control the charging circuit to perform the direct current charging on the power battery in response to the maximum allowable output voltage being greater than the battery voltage of the power battery, or control the charging circuit to perform the direct current boost charging on the power battery in response to the maximum allowable output voltage being smaller than or equal to the battery voltage of the power battery. In this way, a failure rate of the system is reduced, which improves stability and safety of the system and reduces manufacturing costs and layout difficulty of a vehicle.

A vehicle is provided according to embodiments of the present disclosure. The vehicle includes the charging system according to the above embodiments.

FIG. 6 is a flowchart of a method for charging a power battery according to an embodiment of the present disclosure.

As illustrated in FIG. 6, the method for charging the power battery performs direct current charging or direct current boost charging on the power battery using a charging circuit integrated with a direct current boost charging member and a direct current charging member. The method includes the following operations.

At step S101, obtain a maximum allowable output voltage of a charging pile subsequent to the charging circuit being connected to the charging pile.

It should be understood that, in the embodiment of the present disclosure, the maximum allowable output voltage of the charging pile is obtained subsequent to the charging circuit being connected to the charging pile, which facilitates subsequently determining magnitude between the maximum allowable output voltage and a voltage of the power battery to select a corresponding charging mode.

At step S102, control the charging circuit to perform direct current charging on the power battery in response to the maximum allowable output voltage being greater than a battery voltage of the power battery, or the charging circuit is controlled to perform direct current boost charging on the power battery in response to the maximum allowable output voltage being smaller than or equal to the battery voltage of the power battery.

It should be understood that, in the embodiment of the present disclosure, the charging circuit is controlled to perform the direct current charging on the power battery in response to the maximum allowable output voltage being greater than the battery voltage of the power battery, or the charging circuit is controlled to perform the direct current boost charging on the power battery in response to the maximum allowable output voltage being smaller than or equal to the battery voltage of the power battery. In this way, a failure rate of a system is reduced, which improves stability and safety of the system and reduces manufacturing costs and layout difficulty of the vehicle.

Specifically, as illustrated in FIG. 4, a charging logic includes: after the charging gun is inserted and swiped for charging, when it is recognized that the maximum allowable output voltage of the charging pile is greater than the battery voltage, controlling a boost relay K1 and a capacitor relay K3 of the direct current boost charging member to be disconnected and a direct current relay K2 to be closed, controlling a main positive relay K4 and a main negative relay K6 of the direct current charging member to be closed, and directly performing, by the charging pile, the direct current charging on the power battery; entering a direct current boost charging process when it is recognized that the maximum allowable output voltage of the charging pile is smaller than the battery voltage. A boost charging logic is collecting and determining voltages across the capacitor relay K3 and the boost relay K1 of the direct current boost charging member, closing the capacitor relay K3 and the boost relay K1 of the direct current boost charging member after a determining condition is met, and closing the main positive relay K4 and the main negative relay K6 of the direct current charging member.

In the embodiment of the present disclosure, the charging circuit further includes an electric drive module. Controlling the charging circuit to perform direct current boost charging on the power battery includes: sending a voltage transformation demand instruction to the charging pile and a voltage reduction instruction to the electric drive module subsequent to the power battery reaches a high voltage in a direct current boost charging process, in which the electric drive module enters a voltage reduction mode according to the voltage reduction instruction and reduces an output voltage of the power battery to a voltage matched with a voltage of the charging pile; and sending a voltage boost instruction to the electric drive module subsequent to successfully handshaking with the charging pile, in which the electric drive module enters a voltage boost mode according to the voltage boost instruction, and direct current boost charging is performed on the power battery through the electric drive module and the direct current boost charging member.

It should be understood that, in the embodiment of the present disclosure, the battery management system sends corresponding instructions to the charging pile and the electric drive module, adjusts and corrects voltages and currents charged by the charging pile in real time, and then inputs them to the power battery, realizing a direct current boost charging function.

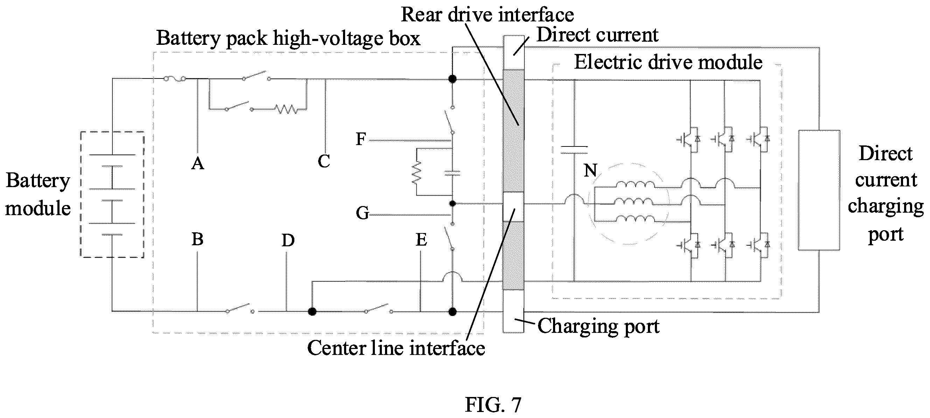

In the embodiment of the present disclosure, as illustrated in FIG. 7, the direct current boost charging member includes a boost relay, a first capacitor, and a capacitor relay. The direct current charging member includes a direct current delay, a main positive relay, and a main negative relay. A first sampling point C is disposed between the main positive relay and a direct current charging port. A second sampling point E is disposed between the direct current relay and the direct current charging port. A third sampling point F is disposed between the capacitor relay K3 and the capacitor C1. A fourth sampling point G is disposed between the main negative relay K6 and the capacitor C1.

It should be understood that, sampling points are set in the embodiment of the present disclosure to solve condition determination and fault diagnosis of charging steps in a boost charging process. Its purpose is to make corresponding fault treatment in time when a boost component fails, in such a manner that safety of the system is improved.

Specifically, as illustrated in FIG. 7, a sampling point A is disposed between a battery module and the *b* terminal of the main positive relay K4. A sampling point B is disposed between the battery module and the b terminal of the main negative relay K6. A sampling point C is disposed between the *a* terminal of the main positive relay K4 and a positive electrode of the direct current charging port. A sampling point D is disposed between the main negative relay K6 and the fast charging relay. A point E is disposed between the boost relay K1 and a negative electrode of the direct current charging port. A point F is disposed between the capacitor relay K3 and the stabilizing capacitor C1. A point G is disposed between the boost relay K1 and the reduction voltage capacitor.

In the embodiment of the present disclosure, as illustrated in FIG. 7, the method further includes subsequent to the power battery reaches the high voltage in the direct current boost charging process: obtaining voltages of the first sampling point, the second sampling point, the third sampling point, and the fourth sampling point; calculating a first voltage between the third sampling point and the fourth sampling point, a second voltage between the first sampling point and the fourth sampling point, and a third voltage between the first sampling point and the second sampling point based on the voltages of the first sampling point, the second sampling point, the third sampling point, and the fourth sampling point; when the high voltage of the power battery is activated, the vehicle is not charged with direct current, and no closing instruction is issued for the capacitor relay K3, determining that the capacitor relay K3 has an adhesion fault in response to the first voltage being equal to the second voltage; and when the high voltage of the power battery is activated, the vehicle is not charged with direct current, the capacitor relay K3 has no adhesion fault, and no closing instruction is issued for the boost relay K1, determining that the boost relay K1 has an adhesion fault in response to the first voltage being equal to the third voltage.

It should be understood that, in the embodiment of the present disclosure, the voltage is collected through a high-voltage copper bar, and designed sampling points are set to solve the condition determination and fault diagnosis of the charging steps in the boost charging process. When the boost component fails, the corresponding fault treatment may be made in time to improve the safety of the system.

Specifically, as illustrated in FIG. 7, a voltage between points F and G may be used to diagnose whether a voltage in a voltage stabilizing capacitor is safely discharged. When a high voltage of the battery is activated, direct current charging is not performed on the vehicle, and the BMS does not issue a closing instruction for the capacitor relay, the voltage between points F and G is compared with a voltage between points C and G to determine whether the capacitor relay is adhered. When the high voltage of the battery is activated, direct current charging is not performed on the vehicle, the BMS does not issue a closing instruction for the boost relay, and an adhesion fault of the fast charging relay is not reported, corresponding diagnosis is made based on a voltage between points C and E and the voltage between the points C and G to determine whether the boost relay is adhered.

With the method for charging the power battery according to the embodiment of the present disclosure, the charging circuit is controlled to perform direct current charging on the power battery in response to the maximum allowable output voltage being greater than the battery voltage of the power battery, or the charging circuit is controlled to perform direct current boost charging on the power battery in response to the maximum allowable output voltage being smaller than or equal to the battery voltage of the power battery. In this way, the failure rate of the system is reduced, which improves the stability and safety of the system and reduces the manufacturing costs and layout difficulty of the vehicle.

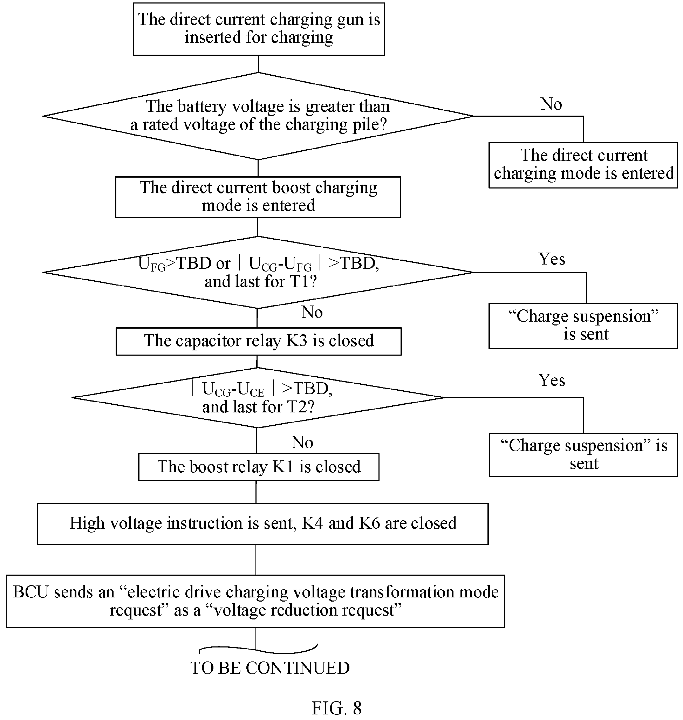

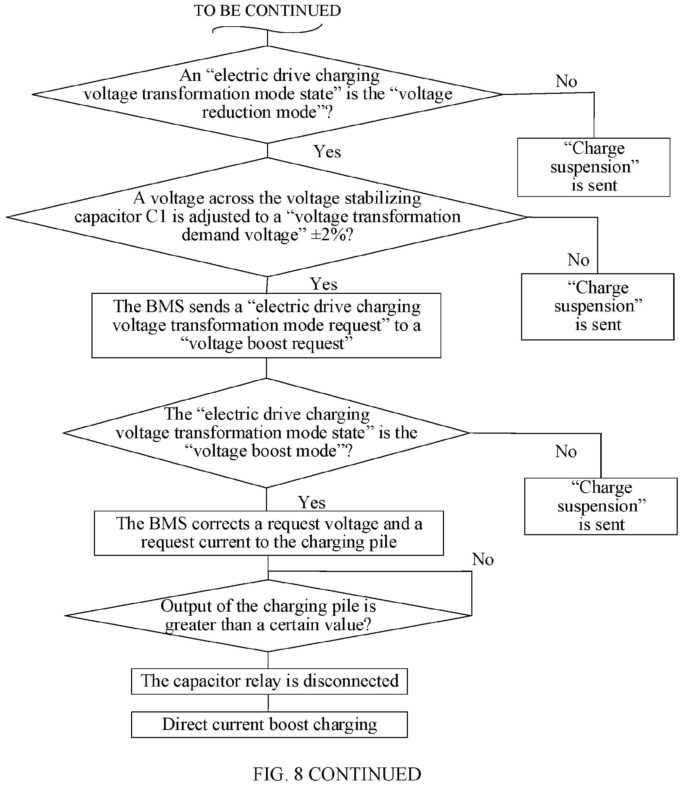

The method for charging the power battery is described in detail below in combination with FIG. 8, which is described in detail as follows.

After the charging gun is inserted and swiped for charging, when it is recognized that the maximum allowable output voltage of the charging pile is greater than the battery voltage, the boost relay K1 and the capacitor relay K3 are disconnected, the direct current relay K2, the main positive relay K4 and the main negative relay K6 are closed, and the charging pile directly performs direct current charging on the power battery. When it is recognized that the maximum allowable output voltage of the charging pile is smaller than the battery voltage, the direct current boost charging process is entered. A specific charging process is as follows. The capacitor relay K3 is controlled to close after the battery management system determines that a collected voltage CF across the voltage stabilizing capacitor C1 or a voltage difference between a voltage CG across the boost relay K1 and the voltage CF across the voltage stabilizing capacitor C1 is smaller than a certain value for a certain period of time. The boost relay K1 is closed after determining that each of the voltage across the boost relay K1 and a voltage of the direct current charging port is smaller than a certain value for a certain period of time. The main positive relay K4 and the main negative relay K6 are closed, and the high voltage instruction is sent to the battery. Under this condition, the battery management system sends the voltage transformation demand instruction to the charging pile and sends a voltage reduction request instruction to the electric drive. After an electric drive charging voltage transformation mode state changes to the voltage reduction mode, a battery output voltage is reduced by the electric drive and then a voltage matching the voltage of the charging pile is output from the electric drive, in such a manner that the voltage across the voltage stabilizing capacitor C1 matches a voltage transformation demand voltage sent by the battery management system, successfully handshaking with the charging pile. At this time, the charging pile may output to the outside. The battery management system sends a voltage boost request instruction to the electric drive, the electric drive responds and an electric drive charging transformation mode state changes to the voltage boost mode, and the battery management system corrects the request voltage and request current to the charging pile. Output of the *a* terminal of the charging pile directly enters the battery pack through the main positive relay K4, and output of the b terminal of the charging pile flows into the electric drive through the boost relay K1 and the center line for voltage boosting. After the electric drive outputs the current, the current enters the power battery through the main negative relay K6 to realize the direct current boost charging function. After entering normal direct current boost charging, the battery management system controls the boost relay K1 to be disconnected. The voltage stabilizing capacitor C1 releases the capacitor voltage through the parallel discharge resistor R2, which is consumed in a form of heat through the discharge resistor R2 to ensure high-voltage safety of the system.

The embodiments of the present disclosure further provide a computer-readable storage medium having a computer program stored thereon. The computer program, when executed by a processor, implements the method for charging the power battery according to the above embodiments.

In the description of this specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

In addition, the terms "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "N" means at least two, such as two, three, etc., unless otherwise specifically defined.

Any process or method described in a flowchart or described herein in other ways may be understood to include one or N modules, segments, or portions of codes of executable instructions for achieving specific logical functions or steps in the process. The scope of a preferred embodiment of the present disclosure includes other implementations. A function may be performed not in a sequence shown or discussed, including a substantially simultaneous manner or a reverse sequence based on the function involved, which should be understood by those skilled in the art to which the embodiments of the present disclosure belong.

It should be understood that each part of the present disclosure may be realized by hardware, software, firmware, or a combination thereof. In the above embodiments, N steps or methods may be realized by software or firmware stored in the memory and executed by an appropriate instruction execution system. For example, when it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a Programmable Gate Array, a Field Programmable Gate Array, etc.

It should be understood by those skilled in the art that all or a part of the steps carried by the method in the above-described embodiments may be completed by relevant hardware instructed by a program. The program may be stored in a computer-readable storage medium. When the program is executed, one or a combination of the steps of the method in the above-described embodiments may be included.

Although embodiments of the present disclosure have been illustrated and described above, it should be understood that the above embodiments are merely exemplary, and cannot be construed to limit the present disclosure. For those skilled in the art, changes, alternatives, and modifications can be made to the embodiments without departing from the scope of the present disclosure.

## Claims

1. A charging circuit, comprising:
a power battery;
an electric drive module; and
a high-voltage box of the power battery connected to each of the power battery and the electric drive module, the high-voltage box being further connected to a direct current charging port, wherein a direct current boost charging member is integrated in the high-voltage box, direct current boost charging being performed for the power battery through the direct current boost charging member and the electric drive module.

2. The charging circuit according to claim 1, wherein the direct current boost charging member comprises a boost relay, a first capacitor, and a capacitor relay, wherein:
an end of the boost relay is connected to an end of the direct current charging port;
another end the boost relay is connected to an end of the first capacitor;
another end of the first capacitor is connected to an end of the capacitor relay;
another end of the capacitor relay is connected to another end of the direct current charging port; and
the other end of the boost relay is further connected to the electric drive module through a center line.

3. The charging circuit according to claim 2, wherein the direct current boost charging member further comprises a discharge resistor, the discharge resistor being connected in parallel to two ends of the first capacitor to discharge a voltage of the first capacitor.

4. The charging circuit according to claim 1, wherein a direct current charging member is further integrated in the high-voltage box, wherein:
direct current charging is performed for the power battery through the direct current charging member; or
direct current boost charging is performed for the power battery through the direct current charging member, the direct current boost charging member, and the electric drive module.

5. The charging circuit according to claim 4, wherein the direct current charging member comprises a direct current relay, a main positive relay, and a main negative relay, wherein:
an end of the direct current relay is connected to each of an end of the direct current boost charging member and an end of the direct current charging port;
another end of the direct current relay is connected to an end of the main negative relay;
another end of the main negative relay is connected to a negative electrode of the power battery;
a positive electrode of the power battery is connected to an end of the main positive relay; and
another end of the main positive relay is connected to each of another end of the direct current boost charging member and another end of the direct current charging port.

6. The charging circuit according to claim 5, wherein the direct current charging member further comprises a pre-charge relay and a pre-charge resistor, wherein:
an end of the pre-charge relay is connected to an end of the main positive relay;
another end of the pre-charge relay is connected to an end of the pre-charge resistor; and
another end of the pre-charge resistor is connected to another end of the main positive relay.

7. The charging circuit according to claim 5, wherein the direct current charging member further comprises a fuse disposed between the power battery and the main positive relay.

8. A charging system, comprising:
the charging circuit according to any one of claims 1 to 7; and
a battery management system configured to identify a maximum allowable output voltage of a charging pile after the charging circuit is connected to the charging pile, the battery management system being configured to control the charging circuit to perform direct current charging on the power battery in response to the maximum allowable output voltage being greater than a battery voltage of the power battery, or control the charging circuit to perform direct current boost charging on the power battery in response to the maximum allowable output voltage being smaller than or equal to the battery voltage of the power battery.

9. A vehicle, comprising the charging system according to claim 8.

10. A method for charging a power battery, wherein the method performs direct current charging or direct current boost charging on the power battery using a charging circuit integrated with a direct current boost charging member and a direct current charging member, and the method comprises:
obtaining a maximum allowable output voltage of a charging pile subsequent to the charging circuit being connected to the charging pile; and
controlling the charging circuit to perform direct current charging on the power battery in response to the maximum allowable output voltage being greater than a battery voltage of the power battery, or controlling the charging circuit to perform direct current boost charging on the power battery in response to the maximum allowable output voltage being smaller than or equal to the battery voltage of the power battery.

11. The method for charging the power battery according to claim 10, wherein the charging circuit further comprises an electric drive module, and said controlling the charging circuit to perform direct current boost charging on the power battery comprises:
sending a voltage transformation demand instruction to the charging pile and a voltage reduction instruction to the electric drive module subsequent to the power battery reaches a high voltage in a direct current boost charging process, wherein the electric drive module enters a voltage reduction mode according to the voltage reduction instruction and reduces an output voltage of the power battery to a voltage matched with a voltage of the charging pile; and
sending a voltage boost instruction to the electric drive module subsequent to successfully handshaking with the charging pile, wherein the electric drive module enters a voltage boost mode according to the voltage boost instruction, and direct current boost charging is performed on the power battery through the electric drive module and the direct current boost charging member.

12. The method for charging the power battery according to claim 11, wherein:
the direct current boost charging member comprises a boost relay, a first capacitor, and a capacitor relay;
the direct current charging member comprises a direct current delay, a main positive relay, and a main negative relay;
a first sampling point is disposed between the main positive relay and a direct current charging port;
a second sampling point is disposed between the direct current relay and the direct current charging port;
a third sampling point is disposed between the capacitor relay and the first capacitor; and
a fourth sampling point is disposed between the boost relay and the first capacitor.

13. The method for charging the power battery according to claim 12, further comprising, subsequent to the power battery reaches the high voltage in the direct current boost charging process:
obtaining voltages of the first sampling point, the second sampling point, the third sampling point, and the fourth sampling point;
calculating a first voltage between the third sampling point and the fourth sampling point, a second voltage between the first sampling point and the fourth sampling point, and a third voltage between the first sampling point and the second sampling point based on the voltages of the first sampling point, the second sampling point, the third sampling point, and the fourth sampling point;
when the high voltage of the power battery is activated, the vehicle is not charged with direct current, and no closing instruction is issued for the capacitor relay, determining that the capacitor relay has an adhesion fault in response to the first voltage being equal to the second voltage; and
when the high voltage of the power battery is activated, the vehicle is not charged with direct current, the capacitor relay has no adhesion fault, and no closing instruction is issued for the boost relay, determining that the boost relay has an adhesion fault in response to the first voltage being equal to the third voltage.

14. A computer-readable storage medium, having a computer program stored thereon, wherein the computer program is executed by a processor to implement the method for charging the power battery according to any one of claims 10 to 13.
